# EUROPEAN PATENT APPLICATION

(11) **EP 4 779 860 A1**
(43) Date of publication of application: **22.07.2026**
(21) Application number: 25152923.6
(22) Date of filing: 20.01.2025
(51) Int. Cl.: H02P 6/00, H02P 25/06, B60L 13/03, B65G 54/00, H02K 41/00

(54) **ELECTROMAGNETIC TRANSPORT DEVICE WITH A COOPERATION ELEMENT AND METHOD TO OPERATE THE DEVICE**

(71) Applicant: ABB SCHWEIZ AG, 5400 Baden (CH)
(72) Inventor: Herbst, Michael, 5164 Seeham (AT); Almeder, Alexander, 3910 Zwettl (AT); Weber, Andreas, 5020 Salzburg (AT)
(74) Representative: Weiss Patentanwalts GmbH

(57) **Abstract**

To increase the efficiency of electromagnetic transport devices (1) having a stator (2) and a mover (3) with a first and a second drive magnet unit (Y₁, Y₂), a cooperation element (4) designed to interact with the first drive magnet unit (Y₁) and/or with the second drive magnet unit (Y₂) is provided, said first and second drive magnet unit (Y₁, Y₂) each being designed to, by interacting with the cooperation element (4), carry out a cooperation function, and, in a first driving segment, the first drive magnet unit (Y₁) is used to carry out a driving function to move the mover (3) and the second drive magnet unit (Y₂) is used to carry out said cooperation function to cooperate with the cooperation element (4).

## Description

### Field of the invention

The present invention relates to a method for operating an electromagnetic transport device having a stator on which a plurality of electric drive coils is arranged, a control unit to electrically control said drive coils, and at least one mover to be moved along the stator, a first drive magnet unit and a second drive magnet unit being arranged on said at least one mover, which first and second drive magnet unit are each designed to, by interacting with at least one active drive coil of said plurality of drive coils, carry out a driving function to generate a driving force acting on the at least one mover to move the mover along the stator.

The invention further relates to an electromagnetic transport device, preferably in the form of a planar motor or a long stator linear motor.

### Background

In modern transportation systems, it is frequently required to move transport units (in the following also referred to as "movers" or "shuttles") that carry parts, components, goods, etc., over potentially long transport distances between spatially distant stations, such as processing stations or production stations or service stations etc. Various transport systems are known for this purpose, e.g., conveyor belts. In the recent past, electromagnetic transport systems have been used increasingly to that end, such as long stator linear motors (LLM) and planar motors (PM). LLMs and PMs are employed to meet high requirements with regards to flexibility and efficiency and precision that typically are not achievable with, e.g., a conveyor belt. In LLMs and PMs, goods to be transported are picked up and moved by a potentially large number of movers. In comparison to LLMs, PMs provide certain advantages, such as an increased number of degrees of freedom available for moving said movers, improved flexibility, no wear, etc. On the downside, among other aspects, PMs are more expensive, less dynamic, and, in most cases, require more complex control strategies to operate them.

LLMs, their applications and their mode of operation are well known from the prior art. LLMs generally consist of a stator (hereafter also referred to as a " linear motor stator" or "LLM stator") and at least one mover, which mover is used to transport components or goods. As described in US 6,876,107 B2, an LLM stator is usually composed of a plurality of stator segments, whereby a plurality of drive coils (hereafter also referred to as "LLM coils") are arranged in a fixed position next to one another on the LLM stator or on the stator segments of the LLM stator. The stator segments can have different geometries, such as straight lines, curves, switches, and can be assembled into a desired LLM stator by stringing them together. The LLM stator forms a set of at least one path along which a mover or several movers can be moved. The movers are held and guided along the LLM stator. For moving a mover on an LLM, typically only one degree of freedom is available, which degree of freedom coincides with the path formed by the LLM stator, i.e., by the linear motor stator.

PMs are known from the prior art as well. For example, US 9,202,719 B2 discloses the basic structure and basic mode of operation of a PM. As an LLM, a PM also comprises a stator, which, in contrast to an LLM stator, forms a stator plane in which one or more movers can be moved in at least two dimensions, allowing for at least two degrees of freedom for moving a mover. In a PM, drive coils are usually arranged in the stator plane, in some designs also in several planes stacked above or below one another. In case a PM is designed to also allow for lifting, lowering and rotating a mover, up to six degrees of freedom for moving a mover can be achieved.

In order to bring about a controlled movement of a mover for transporting a part or a good or a component, in a PM as well as in an LLM, drive magnet units (units of one or more permanent magnets and/or electromagnets) are provided on the movers, and position sensors (AMR sensors, Hall elements, etc.) are provided on the stator, i.e., the planar motor stator or the linear motor stator, in addition to the drive coils installed on the stator. By controlling the drive coils, a moving magnetic field ("magnetic drive field") can be generated, which interacts with the drive magnet units of the movers to move the movers. In a known manner, the drive coils are controlled in particular by means of control units provided for this purpose, which output firing pulses to semiconductor switches, such as IGBT modules, in order to apply corresponding coil voltages to the drive coils to generate drive currents in the coils to generate said magnetic drive field, eventually. Drive coils that are controlled and therefore energized for the purpose of generating a magnetic drive field are referred to as "active" drive coils. Drive magnets interacting with such active drive coils are considered to carry out a "driving function". In order to move a mover along a stator, some of the drive coils are active drive coils, whereby normally de-energized drive coils become active drive coils and active drive coils become de-energized drive coils. A mover can thus be moved in the direction of a moving magnetic drive field.

Further explanations of LLMs and PMs and their components can be found in WO 2013/143783 A1, WO 98/50760 A2, US 6,876,107 B2, US 2013/0074724 A1, WO 2004/103792 A1 or EP 1 270 311 B1, among other literature, so that no further implementation details will be discussed here.

In various scenarios, a plurality of drive magnet units is arranged on movers of LLMs and PMs. Most prominently, in LLM applications, drive magnet units are frequently arranged on opposing sides of a mover, preferably on a left side and on a right side of a mover, to create drive forces acting on the mover by means of drive coils arranged on stator segments facing said opposing left and right sides of the mover. In this manner, it becomes possible to change the course of movement of a mover in a switch point, i.e. in a turnout point, of an LLM stator. Also in electromagnetic transport devices like an LLM, switch points are oftentimes used to enable complex and intelligent routes. Examples of switches and turnouts can be found in US 2013/0074724 A1 or in EP 3 109 998 B1.

Also in PM applications, drive magnets arranged on different or opposing sides of a mover are known. In PM stators with horizontal stator segments as well as with vertical stator segments stator segments and/or with tilted stator segments, movers having drive magnets arranged on different, preferably tilted, side faces of the mover are used to allow for movements along differently oriented stator segments.

While movers with a plurality of drive magnets on different sides of the mover allow for great flexibility when it comes to path planning or to altering the movement of a mover in a turnout, a plurality of drive magnets on a mover also leads to drawbacks. Most importantly, additional drive magnets add weight, leading to increased energy consumption during operation of a PM or of an LLM, particularly in segments of a PM or of an LLM where not all the drive magnet units are actively used for generating a drive force. Unfortunately, temporal or spatial segments where only one side is used for thrust force generation and where thus at least one drive magnet unit is passive and does not contribute to the generation of a driving force predominate in most practically relevant applications. Outside diverter regions and/or outside turnouts and switching points, typically only one drive magnet unit is active (i.e., used for generating a driving force) and at least one other magnet unit is passive (i.e., does not contribute to generating the driving force). Hence, while increasing the flexibility with regards to movement planning, additional magnet units oftentimes lead to detrimental effects such as increased energy losses and reduced efficiency.

Hence, it is an object of the invention to increase the efficiency of an electromagnetic transport device.

### Summary

This object, for the method and the device mentioned at the outset, is achieved in that at least one cooperation element designed to interact with said first drive magnet unit and/or with said second drive magnet unit is provided, in that said first drive magnet unit and said second drive magnet unit are each designed to, by interacting with the at least one cooperation element, carry out a cooperation function, and in that, in a first driving segment, the first drive magnet unit is used to carry out said driving function to move the mover along the stator and the second drive magnet unit is used to carry out said cooperation function to cooperate with the cooperation element.

By means of the invention, it becomes possible to productively use passive drive magnet units for a meaningful purpose, also at times where passive magnets in regular operation would not be in use. In this fashion, efficiency and flexibility of electromagnetic transport devices can be increased, allowing to enhance the overall performance of e.g. LLMs or PMs. As will be explained in detail later, a cooperation and thus a cooperation function may in particular be understood as an electromagnetic interaction involving a passive magnet unit of a mover, which interaction preferably does not contribute to the active generation of a driving force to move a mover, but serves a different, useful purpose, e.g., sensing, actuating, monitoring etc.

Preferably, in a second driving segment, the second drive magnet unit is used to carry out the driving function to move the mover along the stator, and the first drive magnet unit is used to carry out the cooperation function, in contrast to the first segment outlined above. Employing both drive magnet units for realizing the cooperation function, each at a different time of course, allows to increase efficiency even further.

In a particularly advantageous embodiment of the invention, said first driving segment may be provided in the form of a temporal segment, or in the form of a spatial segment of the electromagnetic transport device, spanning over a part of the stator. In the first driving segment, said driving function is preferably carried out by the first drive magnet unit, and said cooperation function is preferably carried out by the second drive magnet unit, such that at least 85% or at least 90% or at least 95% or at least 99% of the driving force are generated by the first drive magnet unit. In a particularly preferred embodiment of the invention, in the first driving segment, the driving force is entirely and exclusively created by means of the first drive magnet unit.

Of course, also the second driving segment may be provided in the form of a temporal segment or the in form of a spatial segment spanning over a part of the stator. In case of the second driving segment, in contrast to the first driving segment, the drive magnet units swap roles, such that the driving function is carried out by the second drive magnet unit and the cooperation function is carried out by the first drive magnet unit. The possibility to define the driving segments using time but also the geometry allows to adapt the invention to a wide variety of operating concepts for a wide variety of electromagnetic transport devices.

Specifically, when operating an electromagnetic transport device, it may be known a priori in which area a cooperation element is located, but it may not be known at which time a mover reaches this area. On the other hand, it may be easier to specify a time or a time point when a cooperation function shall be started, and hence a time interval in which a cooperation function is to be carried out, especially when it comes to incorporating the cooperation functionality of the invention into an already existing operating strategy. It is of course also conceivable to provide a plurality of first and second driving segments, the first and second driving segments temporarily and/or spatially alternating, a second driving segment preferably being immediately preceded and/or immediately followed by a first driving segment, and a first driving segment preferably being immediately preceded and/or immediately followed by a second driving segment. Such an embodiment allows to employ the invention to complex transport devices, potentially having a plurality of cooperation elements at various locations.

In the first driving segment, by means of said driving function, the at least one mover may be moved in accordance with a predefined movement trajectory, allowing for precise specification of how a mover is moved along the stator. In case a control law is provided for realizing such a movement trajectory, this means that all actuation required for implementing the control law is carried out by means of the driving function, in the first drive segment thus by means of the first drive magnet unit which implements the driving function. Possible control laws are PI-control, PID-control, Model-Predictive-Control (MPC), Sliding-Mode-Control, flatness based control etc. In practice, in this context, the movement trajectory is typically compared to a current position of the mover for determining a control error, and from the control error, according to the control law, a required driving force to minimize the control error is determined, thus making the mover follow the trajectory. Likewise, in the second driving segment, the at least one mover may be moved in accordance with a predefined movement trajectory as well, the driving function then being carried out by the second drive magnet unit, such that the second drive magnet unit is employed for realizing a possible control law.

Depending on the specifics of a practical application, there are many different options to implement the cooperation element according to the invention. For example, the cooperation element may be implemented in the form of a sensor element to measure a magnetic field caused by the first or the second drive magnet unit, allowing to detect a position or a velocity of the mover. However, the cooperation element may as well be implemented in the form of a receiving actuator element to convert a magnetic field caused by the first or the second drive magnet unit into an actuation movement of the actuator element, allowing to actuate, e.g., a valve or a switch or another mechanical component. Moreover, the cooperation element may also be implemented in the form of an active actuator element, preferably a passive mechanic diverter or an external brake or a mobile pickup-unit to pick up the mover, to manipulate a movement of the mover caused by the driving function, and/or in in the form of an emergency system to be triggered a magnetic field caused by the first or the second drive magnet unit, hence increasing safety, and/or in the form of a drive magnet unit arranged on a further mover movable along the stator, allowing for cooperation between two or even more movers, and/or in the form of a product to be transported with the at least one mover. With regards to implementating the cooperation element, the invention allows for great flexibility.

The options for implementing the cooperation element and hence the resulting cooperation function laid out above highlight the fact that the cooperation element may in particular be arranged spatially separate from the stator and of course also from any mover, preferably outside of a switching area of the electromagnetic transport device and/or outside of a transfer area of the electromagnetic transport device and/or outside of a processing station of the electromagnetic transport device and/or outside of a conveyor segment of the electromagnetic transport device, preferably without any electrical connection to the electromagnetic transport device, and preferably stationary, i.e., that the cooperation element remains at its position during operation of the electromagnetic transport device. Should a cooperation element require active control itself, the cooperation element may in particular be governed by a cooperation control unit separate from said control unit to electrically control said drive coils, such that the cooperation element can be provided as an object entirely independent of the remaining electromagnetic transport device, allowing for flexible design and easy retrofitting.

As mentioned at the outset, the object of the invention may as well be achieved by an electromagnetic transport device. Such a transport device may in particular be a planar motor or a long stator linear motor, whose first drive magnet unit and second drive magnet unit are arranged on opposing sides of a mover of the PM or LLM, respectively. In case the electromagnetic transport device is a planar motor, the first drive magnet unit and the second drive magnet unit may as well be arranged in an angle between 45 degrees and 135 degrees to one another, or in an angle between 60 degrees and 120 degrees to one another, or in an angle between 75 degrees and 105 degrees to one another, or in an angle between 85 degrees and 95 degrees to one another, allowing to avoid undesired interferences between the drive magnet units, such that a drive magnet unit carrying out a drive function does not disturb a cooperation function, and vice versa.

### Detailed description

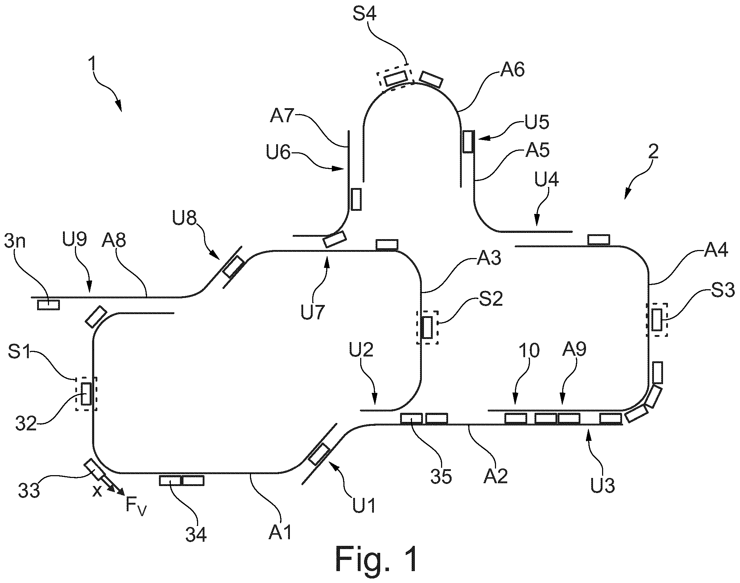

The present invention is described in greater detail below with reference to Figures 1 to 12, which show schematic and non-limiting advantageous embodiments of the invention by way of example. The specific examples described herein are only used to explain the content of the present invention and are not intended to limit the present embodiment. In the figures:
Fig.1 shows an electromagnetic transport device in the form of a long-stator linear motor,
Fig.3 shows the design and electrical structure of a long-stator linear motor,

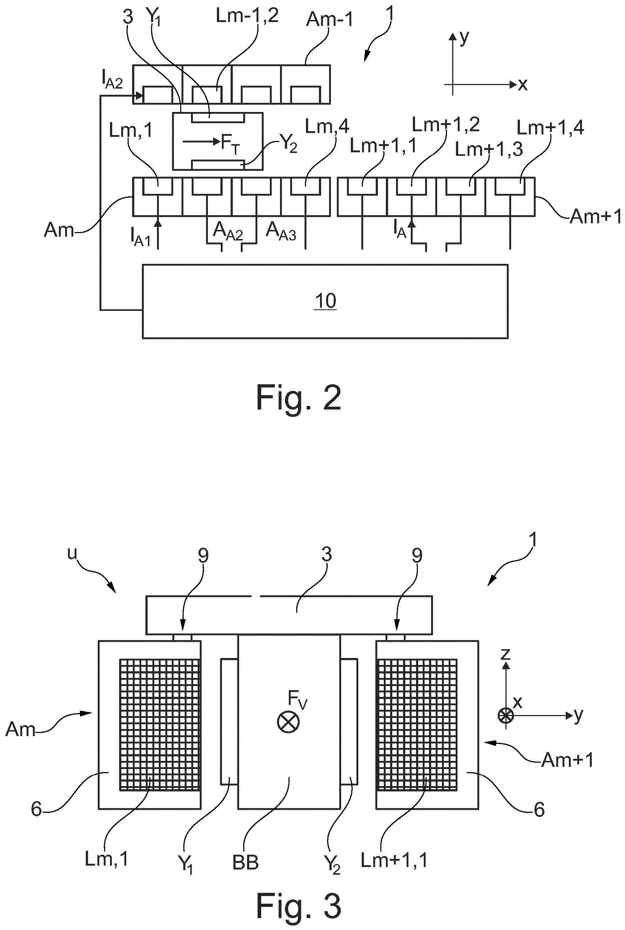

Fig.2 shows a control concept of a long-stator linear motor,

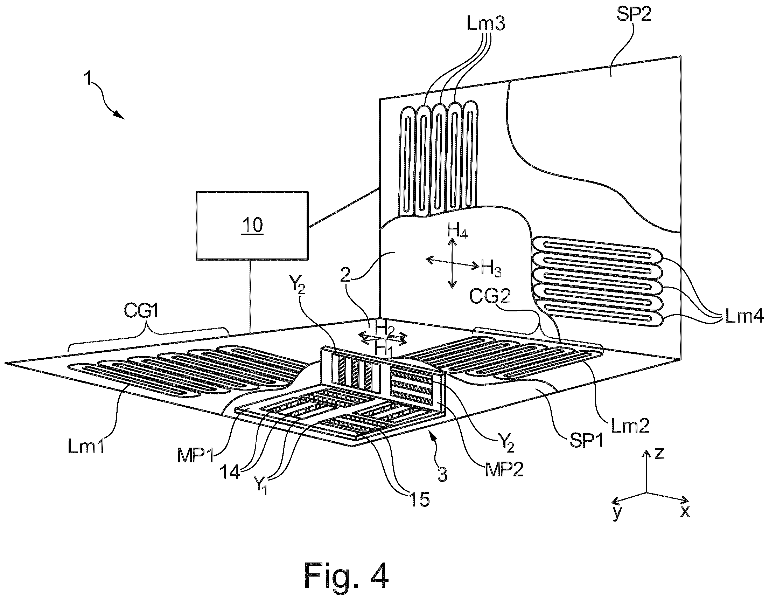

Fig.4 shows a possible embodiment of a planar motor,

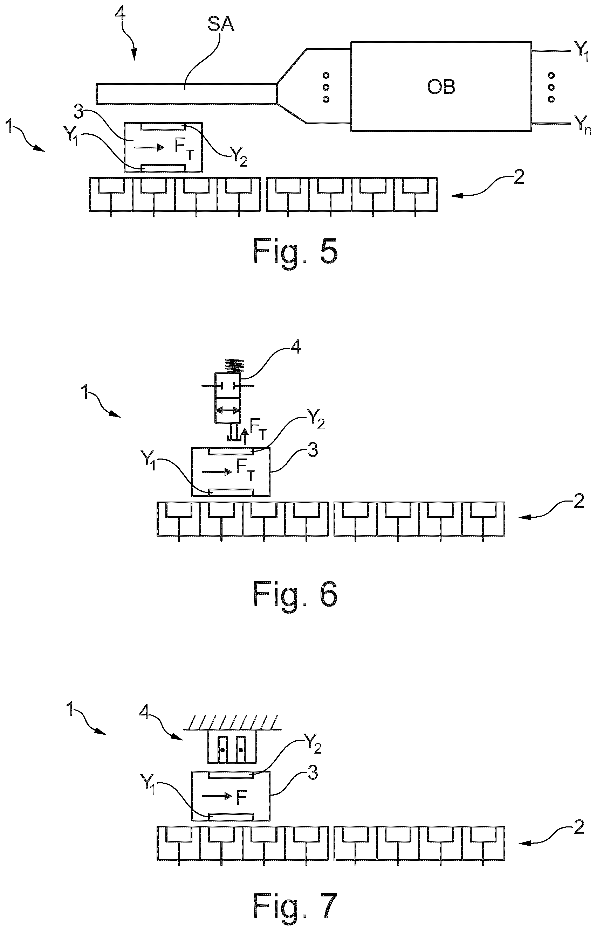

Fig.5 shows an implementation of the invention with a sensor array as cooperation element,
Fig.6 shows an implementation of the invention with a magnetically actuated valve as cooperation element,
Fig.7 shows an implementation of the invention with an external brake as cooperation element,

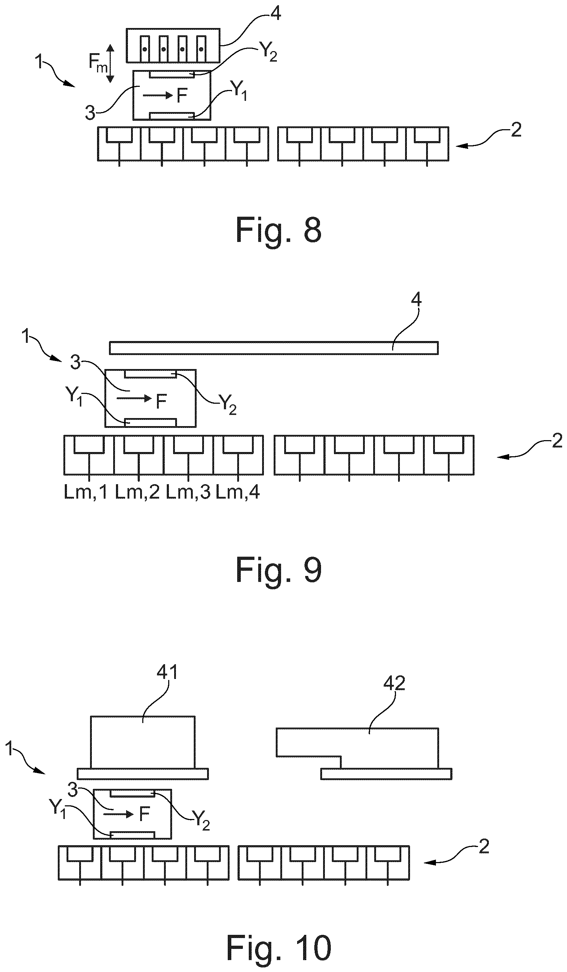

Fig.8 shows an implementation of the invention with a movable pickup unit as cooperation element,
Fig.9 shows an implementation of the invention with a steel plate as cooperation element,
Figs.10 show implementations of the invention with a product and a tool as cooperation elements,

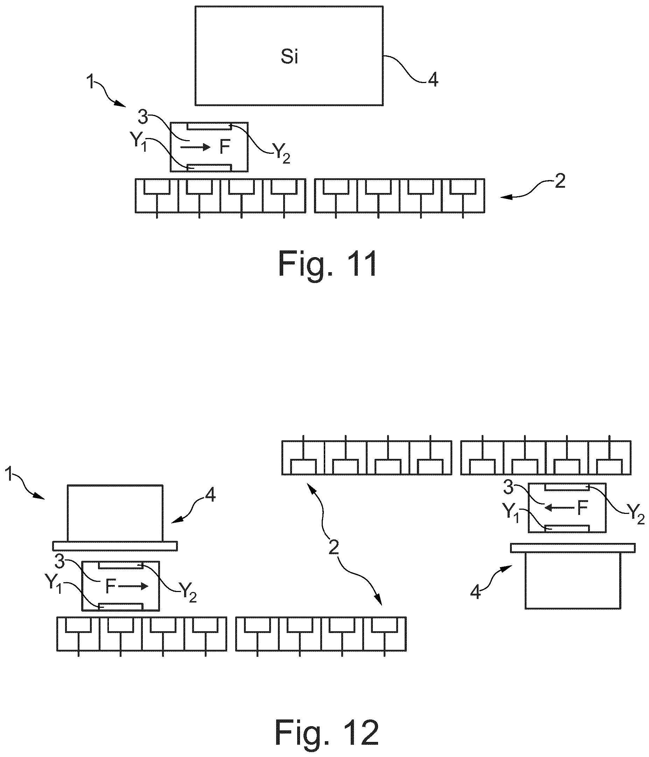

Figs.11 shows an implementation of the invention with decoupled process stations as cooperation elements,
Figs.12 shows an implementation of the invention with a twisted product as a cooperation element.

Fig. 1 shows an example of an electromagnetic transport device 1 in the form of a long-stator linear motor (LLM) as it is known from the prior art, e.g. from EP 3 363 751 B1. The LLM 1 consists of a number of transport sections A1...A9. The transport sections A1...A9, in a known manner, each form a part of the stator 2 of the LLM 1. This modular structure enables a flexible design, but also requires a plurality of transfer positions U1... U10, at which movers 31...3n moved in the transport device 1 are transferred from one transport section to another (for reasons of clarity, not all movers 3 are marked with a reference sign in Fig.1). Within the scope of the present considerations, n is an index that stands for the number of present movers. In case one specific mover of the plurality of movers shown is addressed, the specific mover 3i is referenced by a specific index "i". In case the movers 31...3n are addressed in general, the general numeral "3" will be used instead.

As mentioned above, in the LLM 1 shown, a number of transfer positions U1...U10 is provided. Different types of transfer positions U1...U10 are conceivable. At the transfer positions U2 and U7, e.g., a turnout may be provided, while the other transfer positions U1, U3...U6, U8, U9 can be designed as transfer points, i.e. switch points, from one transport section A1...A8 to another. At the transfer position U10, for example, a transition from a one-sided transport section A2 to a two-sided transport section A9 is provided. At the transfer position U2 (turnout) a mover 36 can, for example, be moved on to the transport section A2 or the transport section A3. At a transfer position U1 (transfer position), a mover is transferred from the one-sided transport section A1 to the one-sided transport section A2. Typically, a mover 3 can travel through each transfer position U in both directions.

Further, a plurality of work stations S1...S4, in which manipulation of components transported with a mover 31...3n can take place (assembling, filling, treating, heating, ...), may be arranged along the stator 2 of the LLM 1. A first work station S1 can, for instance, be designed as an infeed and/or outfeed station in which finished components are removed and/or components to be processed are transferred to a mover 31...3n. In subsequent work stations S2...S4, machining steps can be carried out on said components. The movers 31...3n can be stopped for processing in a work station S1...S4, e.g. in a filling station in which empty bottles are filled, or they can be moved through, e.g. in a temperature control station in which components are temperature-treated.

As shown in Fig.2, along the transport sections A1...A9, a plurality of electric drive coils Lₘ₁,...,Lₘₙ is arranged in the longitudinal direction x with the index m indicating the respective transport section Am of the transport sections A1...A9 (in Fig.2, three transport sections Am-1, Am, Am+1 are shown). In an equally well-known manner, by controlling an electric current i_{A} flowing through said drive coils Lₘ₁,...,Lₘₙ, a moving magnetic field may be generated, the moving magnetic field interacting with drive magnet units Y1, Y2 arranged on the movers 31...3n, giving rise to a drive force F_{T} acting on the movers 31...3n to move the movers 31...3n in a longitudinal direction x along the transport sections A1...A9. The interaction between drive magnets Y1, Y2 arranged on the movers 31...3n with the drive coils Lₘ₁,...,Lₘₙ and thus the magnet field created by a current i_{A} flowing through said drive coils will be referred to hereafter as carrying out a driving function. Each of the movers 31...3n can thus be moved individually (speed, acceleration, path) and independently (with the exception of avoiding collisions) by the other movers 31...3n. As this basic principle of a long-stator linear motor is well known, it will not be explained in more detail.

The drive magnet units Y1, Y2 can be designed as permanent magnets or as electromagnets. Typically, a drive magnet unit Y1, Y2 comprises a plurality of individual magnets, preferably strong individual magnets that are capable of producing large drive forces F_{T} in order to drive the movers 3i...3n, such as rare-earth-magnets like samarium-cobalt magnets or neodymium-iron-boron (NIB) magnets. When using a plurality of individual magnets in a drive magnet unit Y1, Y2, the magnets are typically arranged such that north poles and south poles alternate, i.e., with alternating polarity. In certain scenarios, however, a drive magnet unit Y₁, Y₂ may also just consist of a single magnet. The drive magnet unit Y₁, Y₂ can also be designed differently, in order to serve specific demands of specific situations / scenarios, should this be necessary. In particular, said drive magnet unit Y₁, Y₂ can be implemented such that they fit in so-called 50-mm-movers or 100-mm-movers, with specifics of the magnet units Y₁, Y₂ depending on the weight of a mover 3 or depending on the drive forces F_{T} and accelerations needed to carry out a specific task. Thus, a large variety of design options for the drive magnet units Y₁, Y₂ is conceivable, as long as the drive magnet units Y₁, Y₂ allow to generate the drive forces needed to drive a mover 3. It follows, however, that the drive magnet unit Y1, Y2 differ from and hence are no position magnets, since a position magnet is not capable of producing a drive force F_{T} big enough to move a mover 3. Drive forces F_{T} big enough to move a mover 3 of an LLM (but also of a PM) typically lay above 5N or above 10N or above 25N or above 50N.

Fig.2 further shows a control unit 10 to electrically control said drive coils. Possible implementations of the control units mentioned include microprocessor-based hardware, such as microcontrollers and integrated circuits (ASIC, FPGA). A detailed description of how such a control unit 10 can be structured, with, e.g. individual coil sub control units and power amplifiers and segment control units etc., can be found in EP 3 363 751 B1.

In order to realize a transfer position U as described above, drive coils Lₘ₁,...,Lₘₙ are preferably provided on sides of the stator 2 facing the mover 3n, as seen in movement direction x, and drive magnet units Y1, Y2 are arranged on both sides of the mover 3n itself, facing said drive coils Lₘ₁,...,Lₘₙ. How such a construction but also a mover 3 can be implemented in detail, is explained further with reference to Fig.3.

Specifically, Fig.3 shows a cross-section through a transfer point U connecting two transport sections Am, Am+1 and a mover 3 moved through the transfer point U. A plurality of drive magnet units Y1, Y2 of the long-stator linear motor is arranged on a base body BB of the mover on both sides of the mover 3 (depicted in movement direction). The transport sections Am, Am+1 are each formed by a stationary guide construction 6, on which the drive coils Lₘ₁,... ,Lₘₙ, L_{m+1,1},...,L_{m+1,n} of the long-stator linear motor are arranged. The drive magnet units Y1, Y2 are arranged on both sides between the drive coils Lₘ₁,...,Lₘₙ and L_{m+1,1},...,L_{m+1,n}. This means that in each case at least one drive magnet unit Y₁, Y₂ is arranged opposite at least one drive coil (or a group of drive coils) and thereby interacts with a drive coil to generate a drive force F_{T}. The mover 3 can thus be moved between the guide constructions 6.

As mentioned at the outset, electromagnetic transport devices 1 in the form of planar motors (PM) constitute a second important field of application for the invention. To also discuss planar motors, Fig.4 shows a simplified exemplary embodiment of a PM in a partially broken-away plan view. The planar motor 1 shown has at least two transport sections forming a stator 2 with two stator planes SP1, SP2, which stator planes SP1, SP2 are arranged perpendicular to one another, and at least one mover 3, which is movable in the first stator plane SP1 and in the second stator plane SP2. To allow for a movement in said at least two stator planes SP1, SP2, the mover 3 comprises two mover planes MP1, MP2 holding drive magnet units Y1, Y2, which are arranged in an angle to one another such that a movement in said at least two stator planes SP1, SP2 becomes possible. In each stator plane SP1, SP2, an at least two-dimensional movement in two main movement directions H1, H2 and H3, H4, respectively, can be achieved.

A stator plane SP1, SP2 refers to a planar surface of a transport section of a planar motor stator 2. Of course, in a practical application, a plurality of transport section (which can be different) is typically arranged adjacent to one another in order to form an entire stator 2. As a result, also the PM shown can have a modular design, and stator planes SP1, SP2 of different shapes and sizes and angles etc. can be realized. In the stator planes SP1, SP2 shown, several movers 3 can be moved simultaneously and independently of one another.

On the first stator plane SP1, a first coil group CG1 with several drive coils Lm1 defining the first main movement direction H1, and a second coil group CG2 with several drive coils Lm2, defining the second main movement direction H2, are arranged. On the second stator plane SP2, a third coil group CG3 with several drive coils Lm3, which defines the third main movement direction H3, and a fourth coil group CG4 with several drive coils Lm4, which defines the fourth main movement direction H4, are arranged. In the following, the drive coils are also designated by Lmi, where "i" is an index, in order to be able to distinguish the drive coils if necessary. The drive coils Lm1 of the first coil group CG1 are arranged next to each other in a specific direction - in the case shown, in the X-direction of a Cartesian coordinate system - in order to form the first main movement direction H1 for the movement of the mover 3, which in this case extends along the X-axis. The drive coils Lm2 of the second coil group CG2 are arranged next to each other in a specific direction as well - in this case, the Y-direction of a Cartesian coordinate system - in order to form a second main movement direction H2 for the mover 3, which in this case extends along the Y-axis. Drive coils Lmi can also be arranged one above another, as is well-known from the prior art.

In the PM shown, several individual drive magnets 14, 15 are comprised in the drive magnet units Y1, Y2 arranged on the at least one mover 3, in order to interact electromagnetically with drive coils Lm1, ..., Lm4 of at least one of the coil groups CG1, ..., CG4 in the regions of the first and second stator planes SP1, SP2, carrying out said driving function. For this purpose, the mover 3 is typically equipped with a main body, on the underside of which (facing a stator plane SP1, SP2) the drive magnets 14, 15 and hence the drive magnet units Y1, Y2 are arranged. In Fig. 4, the main body is shown broken away to be able to see the arrangement of the drive magnets 14, 15. The drive magnets 14, 15 are bundled to several drive magnet units Y1, Y2. The drive magnets 14, 15 in the drive magnet units Y1, Y2 are usually arranged with alternating polarity. Individual drive magnets 14, 15 can also be oriented differently in the different drive magnet units Y1, Y2. As discussed for the LLM, however, it is also conceivable to provide just a single magnet in one drive magnet unit Y1, Y2. As in the case of the LLM discussed by means of Figs.1-3, also the PM has a control unit 10 to electrically control the drive coils.

Generally speaking, in most practically relevant use cases, the first drive magnet unit Y₁ and the second drive magnet unit Y₂ are arranged in an angle between 45 degrees and 135 degrees to one another, or in an angle between 60 degrees and 120 degrees to one another, or in an angle between 75 degrees and 105 degrees to one another, or in an angle between 85 degrees and 95 degrees to one another.

In the example shown, four first drive magnet units Y1 and two second drive magnet units Y2 are arranged on the mover 3. A single first drive magnet unit Y1 and a single second drive magnet unit Y2 per mover 3 would substantially already be enough to move the mover 3 in the stator planes SP1, SP2. Of course, more than four first drive magnet units Y1 and more than two second drive magnet units Y2 can also be arranged on a mover 3. An unequal number of first and second drive magnet units Y1, Y2 is also conceivable - for example, two first drive magnet units Y1 and one second drive magnet unit Y2.

With the planar motor 1 shown, a substantially unrestricted movement of a mover 3 in said movement directions H1, H2, H3, H4 becomes possible, for example, in the two stator planes SP1, SP2 of the transport section. Consequently, it is possible to move mover 3 only along the X-axis or only along the Y-axis and even along the Z-axis. The mover 3 can be moved simultaneously in both main movement directions H1, H2, e.g., along a two-dimensional movement path lying in the stator planes SP1, SP2. With a corresponding structural design of the stator 2 and the respective mover 3, also further degrees of freedom can be used at least to a limited extent (translational movement in the vertical direction Z + rotation about the three axes X, Y, Z).

As mentioned at the outset, movers 3 of electromagnetic transport devices 1 having a plurality of drive magnet units Y1, Y2 on different sides of the mover 3, as presented by means of the LLM and PM of Figs. 1-4, allow for great flexibility when it comes to path planning or to altering the movement of a mover 3 of an electromagnetic transport device 1 like an LLM or a PM during operation. However, providing a plurality of drive magnet units Y1, Y2 on a mover 3 also leads to drawbacks. Most importantly, additional drive magnet units Y1, Y2 add weight and hence lead to increased energy consumption during operation of a PM or of an LLM, simply because more weight needs to be moved, particularly in segments of a PM or of an LLM where only one drive magnet unit Y1, Y2 is used for generating a drive force F_{T} (in the course of the following considerations, a drive magnet unit Y1, Y2 not actively involved in the generation of a drive force F_{T} and hence in carrying out said driving function will be referred to as a passive drive magnet unit or simply as a "passive magnet").

Hence, while increasing the flexibility with regards to movement planning, additional drive magnet units Y1, Y2 also lead to detrimental effects such as increased energy losses and reduced efficiency. Referring to the LLM discussed by means of Figs.1-3 and to the PM discussed by means of Fig.4, both drive magnet units Y1, Y2 are typically only used at the same time in very special situations, in case of an LLM when a mover 3 passes through a diverter area with two opposing transport sections, each equipped with drive coils, and in case of a PM with perpendicular stator planes SP1, SP2 when a mover 3 approaches a corner between stator planes SP1, SP2. In most other areas, the unused and thus passive drive magnet unit constitutes additional load.

In order to overcome these drawbacks and in order to increase the efficiency of an electromagnetic transport device 1 as the LLM or PM discussed so far, according to the invention, at least one cooperation element 4 designed to interact with said first drive magnet unit Y₁ and/or with said second drive magnet unit Y₂ is provided, where said first drive magnet unit Y₁ and said second drive magnet unit Y₂ are each designed to, by interacting with the at least one cooperation element 4, carry out a cooperation function. In a first driving segment, the first drive magnet unit Y₁ is used to carry out said driving function to move the mover 3 along the stator 2 and the second drive magnet unit Y₂ is used to carry out said cooperation function to cooperate with the cooperation element 4. Of course, the method outlined so far only constitutes a first, advantageous aspect of the method according to the invention. Hence, preferably, in a second driving segment, the second drive magnet unit Y₂ may be used to carry out said driving function to move the mover 3 along the stator 2, and the first drive magnet unit Y₁ may be used, in contrast to the first segment outlined above instead of the second drive magnet unit Y₂, to carry out said cooperation function.

By means of the invention, it becomes possible to productively use passive drive magnet units Y1, Y2 for a meaningful purpose, also at times where such passive magnets Y1, Y2 in regular operation would not be in use. In this fashion, efficiency and flexibility of electromagnetic transport devices can be increased. Generally speaking, by means of the invention, the overall performance of an LLM or PM can be improved. Specifically, as will be discussed in detail in the following, movers can be influenced by external systems (braking, mechanic diverter, pick-up), states of a mover can be measured with an external system (e.g. position, velocity, air gap length of an LLM or a PM, wear monitoring, etc), but also the environment of an electromagnetic transport device can be influenced.

Preferably, said first driving segment is provided in the form of a temporal segment, or in form of a spatial segment of the electromagnetic transport device 1 spanning over a part of the stator 2. In the first driving segment, preferably, said driving function is exclusively carried out by the first drive magnet unit Y₁ and said cooperation function is exclusively carried out by the second drive magnet unit Y₂, such that preferably at least 85% or at least 90% or at least 95% or at least 99% of the driving force F_{T} are generated by the first drive magnet unit Y₁. In a particularly preferred embodiment of the invention, in the first driving segment, the driving force F_{T} is entirely created by the first drive magnet unit Y₁.

Also the second driving segment may be provided in the form of a temporal segment or a spatial segment of the electromagnetic transport device 1 spanning over a part of the stator 2. In case of the second driving segment, preferably, said driving function is exclusively carried out by the second drive magnet unit Y₂ and said cooperation function is exclusively carried out by the first drive magnet unit Y₁, such that preferably at least 85% or at least 90% or at least 95% or at least 99% of the driving force F_{T} are generated by the second drive magnet unit Y₂. Also in this second scenario, preferably, the driving force F_{T} may be entirely created by the second drive magnet unit Y₂, i.e., only the second drive magnet unit Y2 may be used for moving the mover 3.

Referring again to the planar motor discussed by means of Fig.4, the driving segments can be understood as spatial areas where the drive magnet units Y1, Y2 on the mover 3 are capable of interacting solely with drive coils Lₘᵢ of one stator plane of the two stator planes SP1, SP2. In the specific scenario shown in Fig.4, the second drive magnet units Y2 arranged on the second mover plane MP2 thus come in question for interacting with a cooperation element 4. Eventually, it depends on the orientation of a mover 3 in a planar motor PM, which of the drive magnet units Y1, Y2 carries out the cooperation instead of the driving function. With regards to an LLM as discussed by means of Figs.1-3, a driving segment according to the invention can be understood as a transport section Am or a part of a transport section Am where coils are arranged only on one side of a mover 3 which is moved through the transport section Am. Specifically, in Fig.1, this could be the part of transport section A1 where mover 34 is located in the drawing.

However, it is important to stress that a driving segment according to the invention cannot only be identified by means of a geometrical, i.e. spatial description, e.g., in the form of a specific part of a stator 2 or a specific spatial section encompassing a part of a stator 2. In case a movement path or a movement trajectory to move a mover 3 through a stator 2 of a PM or through a stator 2 of an LLM is predefined a priori, it is typically known when, i.e. at what time points, a mover 3 reaches which areas of a stator 2. In such a case, also temporal information can be used to identify a first or a second driving segment according to the invention. For example, it may be specified that a first driving segment is reached after a predefined duration, such as after 10 seconds or after 20 seconds or after 30 seconds etc., after starting a movement of a mover 3.

In a further preferred embodiment, a plurality of first and second driving segments may be provided, as in the stator 2 of the LLM shown in Fig.1, the first and second driving segments temporarily and/or spatially alternating, a second driving segment preferably being immediately preceded or followed by a first driving segment, and a first driving segment preferably being immediately preceded or followed by a second driving segment. In a first driving segment, by means of said driving function, the at least one mover 3 may be moved in accordance with a predefined movement, the driving function preferably being exclusively carried out by the first drive magnet unit Y₁. In the second driving segment, the at least one mover 3 may be moved in accordance with a predefined movement trajectory as well, the driving function preferably being exclusively carried out by the second drive magnet unit Y₂.

In the following, by means of Figs.5-10, a series of possible implementations of the cooperation element 4 according to the invention is presented, allowing for different cooperation functions. By Figs.5-10, it becomes clear that a cooperation function may be understood as an electromagnetic interaction involving an otherwise passive magnet unit, which electromagnetic interaction, in a preferred manner, does not contribute to actively driving a mover but serves a different purpose, such as the ones shown in the following.

As a preliminary to Figs.5-10, however, it is to be mentioned that cooperation elements 4 according to the invention, especially as the ones shown below, share a series of common features. Particularly, a cooperation element 4 according to the invention is not a drive coil, such as the drive coils Lₘ₁,...,Lₘₙ comprised in an LLM according to Figs.1-3 or in a PM according to Fig.4. Moreover, a cooperation element 4 according to the invention preferably is arranged spatially separate from the stator 2, i.e. spatially separate from an LLM stator 2 or from a PM stator 2, and of course also from the movers 3, meaning that there is no mechanical link or connection as well as no electrically conducting connection between the stator 2 and the cooperation element 4. To that end, a cooperation element 4 may be arranged outside a switching area of a stator 2, or also spatially distant from a conveyor belt. However, in this regard, it is to be mentioned that it is also conceivable that a cooperation element 4 may be connected to a stator or that a cooperation element 4 uses the same power supply and the same PLC (programmable logic controller) of an LLM or PM, thus forming a mechanical or electrical connection, while not being part of the stator 2 itself or a diverter section of the stator 2 or a switching section of the stator. Moreover, it is conceivable that a cooperation element 4 according to the invention is arranged inside a processing station of an LLM or of a PM. In case a cooperation element 4 requires control, a cooperation element 4 may in particular be governed by a cooperation control unit separate from said control unit for controlling the drive coils Lₘ₁,...,Lₘₙ arranged in the stator of the electromagnetic transport device 1.

Fig.5 first shows an implementation of the invention with a sensor array SA as cooperation element 4. Hence, with the passive drive magnet unit Y2 measurements can be executed. From those measurements, specific system states y1,...,yn (position, velocity, ...) or parameters (air gap length) can be derived ("observed"), as shown by means of an observer OB. For example, the position of the passive drive magnet unit Y2 could be measured with an external sensor array. This sensor array can potentially be entirely separated from a network of the electromagnetic transport device 1 and act as a safety device. In this fashion, the safety of the electromagnetic transport device 1 can be improved by a great deal, as even in cases where, e.g., the electrical supply of the electromagnetic transport device 1 fails, independent cooperation elements 4 may still provide information about the locations and the movement states of the movers 3 present in the system. To implement such a cooperation element 4, for instance, coils can be used to measure an induced voltage, which measured voltages can also be used to estimate a velocity of a mover 3, or another suitable measurement principle may be applied (Hall effect sensors etc.). Measurement coils can also be fed with a high-frequency-signal, i.e. frequencies preferably higher than the frequencies present in the voltages and currents employed to carry out the driving function, and/or pulse injection methods can be carried by means of such coils to obtain information about the position or velocity of the mover, preferably by measuring and analyzing a response to such a pulse. Information obtained in this fashion can moreover be used to evaluate the need of maintenance. Measuring the magnetic field of a drive magnet unit can give information if a mover is currently within a specific area or not, and, moreover, also about the state and the wear of the magnet unit the cooperation element 4 interacts with.

Fig.6 further shows an implementation of the invention with a magnetically actuated valve as cooperation element 4. The passive drive magnet unit can be used to apply a force F4 on a stationary magnetically conducting part (e.g. iron), which may actuate, i.e., close or open, the valve.

Fig.7 shows an implementation of the invention with an external brake as cooperation element 4. Such brakes can serve safety purposes by avoiding excessive speeds. Besides generating forces that act on the environment, as in the case of the valve shown in Fig.6, forces can also be applied on a mover 3 in order to brake the mover 3. A brake may in general be implemented in the form of any electromagnetically active or passive device that allows to slow down the mover 3, e.g., another magnet unit, a coil etc.

Fig.8 shows an implementation of the invention with a movable pickup unit as cooperation element 4. Within the scope of this embodiment, the mover 3 can be picked up by a separate pick-up unit using electromagnetic forces Fm. Such a pickup unit can be stationary or carried out by a handling device. There are various possibilities to implement a pickup unit, for instance as a robot arm of an industrial robot or as a unit based on electromagnetic forces to carry out the pickup.

Fig.9 shows an implementation of the invention with a steel plate as cooperation element 4. This approach is useful in a series of practically important scenarios. First, a mover 3 can be moved to a further transport section Am having a different guide 9. If the attraction force between a passive drive magnet unit Y2 and the steel plate 4 is higher than the attraction force between the motor drive magnet unit and the active drive coils Lₘ₁,...Lₘ₂, the mover will be pulled to the other track, i.e. to the other transport section. This approach can be used for emergency devices. Moreover, a steel plate can also be used to simply compensate for undesired attraction, i.e., normal forces. Compensating attraction force between a drive magnet unit Y1, Y2 and a stator 2 in specific areas can reduce wear or allow so-called to zero-stiffness (high dynamics are achievable) actuation. Also the functionality of a magnetic bearing leading to levitation is conceivable.

Moreover, if inherent regions of disturbance exist in an electromagnetic transport system as in a PM or in an LLM, a cooperation element 4 could be provided to compensate for those disturbances. Compensation with an external cooperation element 4 can thus prevent the actual motion system from piecewise higher loads due to inherent disturbances, that, without such a cooperation element 4, the electromagnetic transport device 1 would have to compensate for itself.

Figs.10 further shows an implementation of the invention with a product and different tools as cooperation elements 4. Two movers could be used for a manufacturing process with one mover carrying the product, and the other mover carrying a tool.

Fig.11 shows an implementation of the invention with a decoupled process station Si as cooperation element 4. Interaction between a decoupled process station Si from a network of an electromagnetic transport device 1 can be achieved. This can be used for emergency systems, e.g., error handling in case of system shutdown.

Fig.12 shows an implementation of the invention where a product or product carrier to be transported itself acts as cooperation element 4, the cooperation function thus influencing a or interacting with a product it does not carry at the moment. As can be seen in Fig.12, the product and/or product carrier may also be twisted to the other side of the mover 3.

## Claims

1. A method for operating an electromagnetic transport device (1) having a stator (2) on which a plurality of electric drive coils (Lₘ₁,...,Lₘₙ) is arranged, a control unit (10) to electrically control said drive coils (Lₘ₁,...,Lₘₙ), and at least one mover (3) to be moved along the stator (2), a first drive magnet unit (Y₁) and a second drive magnet unit (Y₂) being arranged on said at least one mover (3), which first and second drive magnet unit (Y₁, Y₂) are each designed to, by interacting with at least one active drive coil (Lₘ₁,...,Lₘₙ) of said plurality of drive coils (Lₘ₁,...,Lₘₙ), carry out a driving function to generate a driving force (F_{T}) acting on the at least one mover (3) to move the mover (3) along the stator (2), **characterized in that** at least one cooperation element (4) designed to interact with said first drive magnet unit (Y₁) and/or with said second drive magnet unit (Y₂) is provided, **in that** said first drive magnet unit (Y₁) and said second drive magnet unit (Y₂) are each designed to, by interacting with the at least one cooperation element (4), carry out a cooperation function, **and in that,** in a first driving segment, the first drive magnet unit (Y₁) is used to carry out said driving function to move the mover (3) along the stator (2) and the second drive magnet unit (Y₂) is used to carry out said cooperation function to cooperate with the cooperation element (4).

2. The method for operating an electromagnetic transport device (1) according to claim 1, **characterized in that** in a second driving segment, the second drive magnet unit (Y₂) is used to carry out said driving function to move the mover (3) along the stator (2) and the first drive magnet unit (Y₁) is used to carry out said cooperation function.

3. The method for operating an electromagnetic transport device (1) according to any one of the previous claims 1 or 2, **characterized in that** the first driving segment is a temporal segment or a spatial segment of the electromagnetic transport device (1) spanning over a part of the stator (2), wherein, preferably, said driving function is exclusively carried out by the first drive magnet unit (Y₁) and said cooperation function is exclusively carried out by the second drive magnet unit (Y₂), such that preferably at least 85% or at least 90% or at least 95% or at least 99% of the driving force (F_{T}) are generated by the first drive magnet unit (Y₁), **and/or in that** the second driving segment is a temporal segment or a spatial segment of the electromagnetic transport device (1) spanning over a part of the stator (2), wherein, preferably, said driving function is exclusively carried out by the second drive magnet unit (Y₂) and said cooperation function is exclusively carried out by the first drive magnet unit (Y₁), such that preferably at least 85% or at least 90% or at least 95% or at least 99% of the driving force (F_{T}) are generated by the second drive magnet unit (Y₂).

4. The method for operating an electromagnetic transport device (1) according to claim 3, wherein a plurality of first and second driving segments is provided, the first and second driving segments temporarily and/or spatially alternating, a second driving segment preferably being immediately preceded or followed by a first driving segment and a first driving segment preferably being immediately preceded or followed by a second driving segment.

5. The method for operating an electromagnetic transport device (1) according to any one of the previous claims, **characterized in that** the cooperation element (4) is arranged spatially separate from the stator (2), preferably outside of a switching area of the electromagnetic transport device (1) and/or outside of a transfer area of the electromagnetic transport device (1) and/or outside of a processing station of the electromagnetic transport device (1) and/or outside of a conveyor segment of the electromagnetic transport device (1) and/or preferably also spatially separate from the mover (3), **and/or in that** cooperation element (4) is governed by a cooperation control unit separate from said control unit to electrically control said drive coils (Lₘ₁,...,Lₘₙ).

6. The method for operating an electromagnetic transport device (1) according to any one of the previous claims, **characterized in that** the cooperation element (4) is implemented in the form of a sensor element to measure a magnetic field caused by the first or the second drive magnet unit (Y₁, Y₂) interacting with the cooperation element (4), preferably in order to detect a position (x, y) or a velocity (vx, vy) of the at least one mover (3), **and/or in that** the cooperation element (4) is implemented in the form of a receiving actuator element to convert a magnetic field caused by the first or the second drive magnet unit (Y₁, Y₂) interacting with the cooperation element (4) into an actuation movement of the actuator element, **and/or in that** the cooperation element (4) is implemented in the form of an active actuator element, preferably a passive mechanic diverter or an external brake or a mobile pickup-unit to pick up the mover (3), to manipulate a movement of the mover (3) caused by said driving function, **and/or in that** the cooperation element (4) is implemented in the form of an emergency system which can be triggered a magnetic field caused by the first or the second drive magnet unit (Y₁, Y₂) interacting with the cooperation element (4), **and/or in that** the cooperation element (4) is implemented in the form of a drive magnet unit arranged on a further mover (32) movable along the stator (2), allowing for a cooperation between said at least one mover (3) and the further mover (32), **and/or in that** the cooperation element (4) is implemented in the form of a product to be transported with the at least one mover (3).

7. The method for operating an electromagnetic transport device (1) according to any one of the previous claims, **characterized in that** the first drive magnet unit (Y₁) and the second drive magnet unit (Y₂) are arranged spatially distant from one another, preferably on side faces of the mover (3), most preferably on opposing side faces of the mover (3).

8. The method for operating an electromagnetic transport device (1) according to any one of the previous claims, **characterized in that,** in the first driving segment, by means of said driving function, the at least one mover (3) is moved in accordance with a predefined movement trajectory, the driving function preferably being exclusively carried out by the first drive magnet unit (Y₁), **and/or in that** in the second driving segment, by means of said driving function, the at least one mover (3) is moved in accordance with a predefined movement trajectory, the driving function preferably being exclusively carried out by the second drive magnet unit (Y₂).

9. The method for operating an electromagnetic transport device (1) according to any one of the previous claims, **characterized in that** said first drive magnet unit (Y₁) consists of at least a single magnet or of a single magnet **and/or in that** said second drive magnet unit (Y₂) consists of at least a single magnet or of a single magnet.

10. Electromagnetic transport device (1) having a stator (2) on which a plurality of electric drive coils (Lₘ₁,...,Lₘₙ) is arranged, a control unit (10) to electrically control said drive coils (Lₘ₁,...,Lₘₙ), and at least one mover (3) to be moved along the stator (2), a first drive magnet unit (Y₁) and a second drive magnet unit (Y₂) being arranged on said at least one mover (3), which first drive magnet unit (Y₁) and which second drive magnet unit (Y₂) are each designed to, by interacting with at least one active drive coil (Lₘ₁,...,Lₘₙ) of said plurality of drive coils (Lₘ₁,...,Lₘₙ), carry out a driving function to generate a driving force (F_{T}) acting on the at least one mover (3) to move the mover (3) along the stator (2), **characterized in that** the electromagnetic transport device (1) further has at least one cooperation element (4), which is designed to interact with said first and second drive magnet unit (Y₁, Y₂) in order to carry out a cooperation function between the at least one mover (3) and the cooperation element (4), **and in that** the control unit (10) is further designed to, in a first driving segment, select the first drive magnet unit (Y₁) to carry out said driving function to move the mover (3) along the stator (2) and to select the second drive magnet unit (Y₂) to carry out said cooperation function to cooperate with the cooperation element (4).

11. The electromagnetic transport device (1) according to claim 10, wherein the electromagnetic transport device (1) is a planar motor (PM) or a long stator linear motor (LLM).

12. The electromagnetic transport device (1) according to claim 11, wherein the electromagnetic transport device (1) is a planar motor (PM), wherein the first drive magnet unit (Y₁) and the second drive magnet unit (Y₂) are arranged in an angle between 45 degrees and 135 degrees to one another, or in an angle between 60 degrees and 120 degrees to one another, or in an angle between 75 degrees and 105 degrees to one another, or in an angle between 85 degrees and 95 degrees to one another.

13. The electromagnetic transport device (1) according to any one of claims 10 to 12, wherein the first drive magnet unit (Y₁) and the second drive magnet unit (Y₂) are arranged on opposing sides of the mover (3).

14. The electromagnetic transport device (1) according to any one of claims 11 to 13, **characterized in that** said first and second drive magnet unit (Y₁, Y₂) are each designed to either carry out the driving function and/or the cooperation function.
